# EUROPÄISCHE PATENTSCHRIFT

(11) **EP 4 483 479 B1**
(45) Veröffentlichungstag und Bekanntmachung des Hinweises auf die Patenterteilung: **30.04.2025**
(21) Anmeldenummer: 23705364.0
(22) Anmeldetag: 14.02.2023
(51) Int. Cl.: H02K 17/22, H02K 3/51

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 21.02.2022 DE 102022103999
(43) Veröffentlichungstag der Anmeldung: 01.01.2025
(73) Patentinhaber: Voith Patent GmbH, 89522 Heidenheim (DE)
(72) Erfinder: WECKERT, Michael, 73432 Aalen (DE); HEINRICH, Bernd, 89129 Öllingen (DE); VESER, Stefan, 89558 Böhmenkirch-Treffelhausen (DE); ELEBRECHT, Philipp, 89518 Heidenheim (DE)
(74) Vertreter: Voith Patent GmbH - Patentabteilung
(86) Internationale Anmeldenummer: PCT/EP2023/053591
(87) Internationale Veröffentlichungsnummer: WO 2023/156370

(56) Entgegenhaltungen:
- EP-B1- 0 826 261
- CN-U- 204 243 955
- DE-C- 701 612

## Beschreibung

Die Erfindung betrifft einen Rotor für eine elektrische Maschine, insbesondere für eine läufergespeiste Schleifringläufermaschine, wie sie für drehzahlregelbare Wasserkraft-Motor-Generatoren für Pumpspeicherkraftwerke zum Einsatz kommen.

Die DE 10 2010 020 415 A1 offenbart einen Rotor, welcher für einen drehzahlregelbaren Wasserkraft-Motor-Generator geeignet ist. Der in dieser Schrift offenbarte Rotor umfasst Wicklungselemente, welche in axial verlaufenden Nuten eines Rotorkörpers angeordnet sind, einen Wickelkopf, welcher axial neben dem Rotorkörper angeordnet ist, und einen Wickelkopfträger, wobei der Wickelkopf über Zugbolzen mit dem Wickelkopfträger verbunden ist. Dabei greifen die Zugbolzen an ihrem radial äußeren Enden an Stützkörper an, welche ihrerseits auf den Wicklungselementen im Bereich des Wickelkopfs aufliegen. Jedes Wicklungselement wird so von jeweils zwei Zugbolzen mittels je einem Stützkörper pro Zugbolzen im Bereich eines Wickelkopfes gehalten. Beim Festziehen der Zugbolzen ergib sich dabei die Schwierigkeit, dass durch die Kraft, die dabei auf die Wicklungselemente ausgeübt wird, dieselben geringfügig nach innen gebogen werden können. Das kann dazu führen, dass beim Festziehen des zweiten Zugbolzens eines betreffenden Wicklungselementes der zuvor festgezogene zugehörige Zugbolzen nicht mehr ausreichend unter Zug steht und sich daher mit der Zeit durch die im Betrieb wirksamen Vibrationen lösen kann.

Einen weiteren gattungsgemäßen Rotor offenbart die CN 204 243 955 U.

Die Aufgabe der Erfindung ist es, eine Anordnung anzugeben, bei der das genannte Problem vermieden werden kann.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Erfindungsgemäßer Rotor
- Fig.2: Ausführungsformen der erfindungsgemäßen Haltebaugruppe

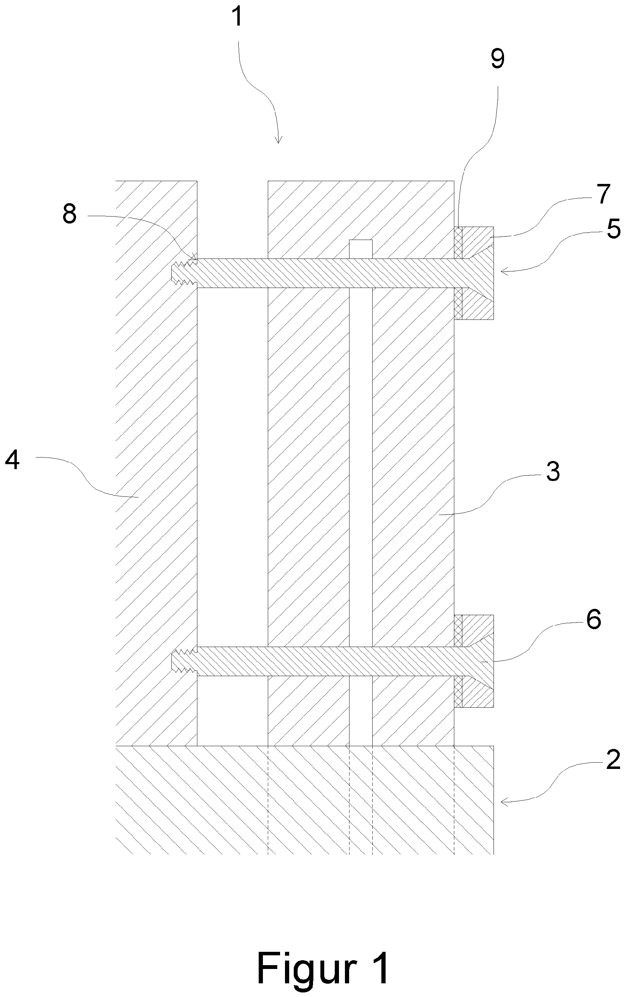

Figur 1 zeigt einen erfindungsgemäßen Rotor in schematischer Darstellung. Dabei ist in Figur 1 nur ein Ausschnitt des Rotors dargestellt. Der Rotor ist mit 1 bezeichnet. Der Rotor 1 umfasst einen Rotorkörper, welcher mit 2 bezeichnet ist, und eine Vielzahl von Wicklungselementen, welche in axial verlaufenden Nuten des Rotorkörpers 2 angeordnet sind. Dabei bilden die Wicklungselemente in radialer Richtung zwei Lagen. Die Wicklungselemente ragen in axialer Richtung über den Rotorkörper 2 hinaus und bilden so einen sogenannten Wickelkopf, welcher axial neben dem Rotorkörper 2 angeordnet ist. Dabei ist jeweils ein Wicklungselement der einen Lage an seinem Ende mit dem Ende eines Wicklungselementes der anderen Lage verbunden. In Figur 3 ist ein Wicklungselemente mit 3 bezeichnet.

Damit die Wicklungselemente 3 durch die enormen Fliehkräfte, welche beim Betrieb der elektrischen Maschine wirken, nicht nach radial außen gebogen werden, müssen dieselben im Bereich des Wickelkopfes in ihrer Position gehalten werden. Dazu umfasst der Wickelkopf einen Wickelkopfträger, welcher in Figur 1 mit 4 bezeichnet ist und eine Vielzahl von Halteelementen, von denen eines in Figur 1 mit 5 bezeichnet ist. Dabei umfasst jedes Halteelement 5 jeweils einen Zugbolzen und einen Stützkörper. In Figur 1 ist einer der Zugbolzen mit 6 und einer der Stützkörper mit 7 bezeichnet. Die Stützkörper 7 sind in radialer Richtung außerhalb der Wicklungselemente 3 angeordnet. Die Zugbolzen 6 durchdringen jeweils den zugehörigen Stützkörper 7 und sind mit einem Gewinde in den Wickelkopfträger 4 eingeschraubt. Dabei kann der Wickelkopfträger 4 auch aus mehreren Teilen bestehen, so dass die Zugbolzen 6 beispielsweise in Profilleisten eingeschraubt werden, welche in entsprechenden Nuten des Wickelkopfträgerkörpers angeordnet sind. Profilleisten und Wickelkopfträgerkörper sind dann Teile des Wickelkopfträgers 4.

Erfindungsgemäß umfassen die Halteelemente 5 eine Anschlagfläche 8, welche so ausgebildet ist, dass dieselbe beim Einschrauben der Zugbolzen 6 an den Wickelkopfträger 4 zum Anliegen kommen kann, um so die radiale Länge, mit der die Zugbolzen 6 aus dem Wickelkopfträger 4 herausragen, auf ein vordefiniertes Maß einzustellen. Dabei ist das vordefinierte Maß so bemessen, dass dabei die Stützkörper 7 in Ruhelage des Rotors 1 nicht gegen die Wicklungselemente 3 gepresst werden. D.h. in Ruhelage des Rotors 1 berühren die Stützkörper 7 idealerweise gerade die Wicklungselemente 3, wenn die Zugbolzen 6 so weit in den Wickelkopfträger 4 eingeschraubt werden, dass die Anschlagfläche 8 an den Wickelkopfträger 4 zum Anliegen kommt. Alternativ kann in der genannten Lage auch ein (kleiner) Zwischenraum zwischen Stützkörper 7 und Wicklungselemente 3 vorhanden sein.

Dabei ist das Merkmal "dass die Stützkörper 7 in Ruhelage des Rotors 1 nicht gegen die Wicklungselemente 3 gepresst werden" so zu verstehen, dass die Druckkraft, die durch die angezogenen Zugbolzen 6 in Ruhelage des Rotors 1 auf die Wicklungselemente 3 übertragen wird, vernachlässigbar klein gegenüber der in den angezogenen Zugbolzen 6 wirkenden Zugkraft ist. Das ist dann der Fall, wenn die durch einen angezogenen Zugbolzen 6 auf die Wicklungselemente 3 übertragene Druckkraft kleiner als 15% der im betreffenden Zugbolzen 6 wirkenden Zugkraft ist.

Die so ausgebildeten Anschlagflächen 8 verhindern einerseits, dass die Wicklungselemente 3 beim Einschrauben der Zugbolzen 6 verformt werden. Andererseits gewährleisten dieselben eine Verspannung der Schraubverbindung zwischen Zugbolzen 6 und Wickelkopfträger 4, so dass sich die Schraubverbindung, während dem Betrieb des Rotors 1, nicht lösen kann. Eine hohe Vorspannung der Zugbolzen 6 bewirkt außerdem, dass die während dem Betrieb zusätzlich auf die Zugbolzen 6 wirkende Kraft klein gegenüber der Vorspannkraft ist, wodurch sich die Lebensdauer der Zugbolzen 6 verlängert.

Optional können die Halteelemente 5 ein elastisches Element umfassen, welches in dem Zwischenraum zwischen dem zugehörigen Stützkörper 7 und den vom betreffenden Halteelement 5 gehaltenen Wicklungselementen 3 angeordnet ist. In Figur 1 ist ein solches elastisches Element mit 9 bezeichnet. Dabei sind die elastischen Elemente 9 so ausgelegt, dass dieselben in radialer Richtung geringfügig zusammengepresst werden, wenn die Zugbolzen 6 soweit eingeschraubt werden, bis die zugehörigen Anschlagflächen 8 zum Anliegen an den Wickelkopfträger 4 kommen. Dabei ist das Elastizitätsmodul der elastischen Elemente 9 so zu wählen, dass es bei dem genannten Zusammenpressen derselben nicht zu einer signifikanten Verformung der Wicklungselemente 3 kommen kann. Mit anderen Worten: Die elastischen Elemente 9 sind so ausgelegt, dass es zu keiner signifikanten Verformung der Wicklungselemente 3 kommen kann, wenn die Zugbolzen 6 soweit eingeschraubt werden, bis die zugehörigen Anschlagflächen 8 zum Anliegen an den Wickelkopfträger 4 kommen.

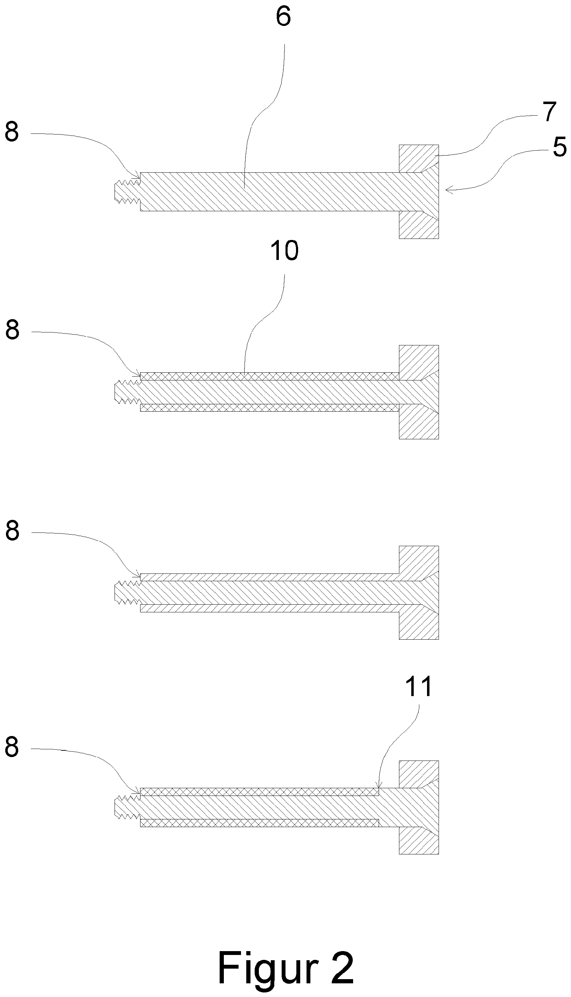

Figur 2 zeigt verschiedene Ausführungsformen erfindungsgemäßer Haltelemente 5. In der oben gezeigten Ausführungsform wird die Anschlagfläche 8 durch einen Absatz des Zugbolzens 6 gebildet. In der von oben zweiten Ausführungsform umfasst das Halteelement 5 eine Hülse, welche mit 10 bezeichnet ist. Der Zugbolzen 6 durchdringt die Hülse 10, und die Anschlagfläche 8 wird durch das Ende der Hülse 10 gebildet, welche zum Wickelkopfträger 4 hin orientiert ist. In der von oben dritten Ausführungsform umfasst der Stützkörper 7 eine hülsenartige Ausstülpung, wobei die Anschlagfläche 8 am Ende der Ausstülpung angeordnet ist. Bei der letztgenannte Ausführungsform sind die Stützkörper 7 nur teilweise in radialer Richtung außerhalb der Wicklungselemente 3 angeordnet, da die hülsenförmige Ausstülpung derselben zwischen die Wicklungselemente 3 hineinragt. Diese Ausstülpung kann auch dazu dienen die durch das betreffende Halteelement gehaltenen Wicklungselemente in lateraler Richtung abzustützen. Eine weitere Ausführungsform ergibt sich durch eine Kombination der beiden letztgenannten Ausführungsformen, indem eine kürzere Hülse 10 mit einer entsprechend kürzeren Ausstülpung des Stützkörpers 7 kombiniert wird. Dabei wird die Anschlagfläche 8 durch das Ende der Hülse 10 gebildet. In der unteren in Figur 2 gezeigten Ausführungsform umfasst der Zugbolzen 6 einen Absatz, welcher mit 11 bezeichnet ist und welcher beim Einschrauben gegen eine Hülse 10 drückt. Die Anschlagfläche 8 wird auch hier durch das Ende der Hülse 10 gebildet. Bei dieser Ausführungsform ergibt sich der Vorteil, dass der Stützkörper 7 weitestgehend entlastet wird. Weitere Ausführungsformen ergeben sich durch die Verwendung mehrerer Hülsen 10 pro Zugbolzen 6, wobei die Hülsen 10 beim Einschrauben des zugehörigen Zugbolzens 6 gegeneinandergepresst werden.

### Bezugszeichenliste

- 1: Rotor
- 2: Rotorkörper
- 3: Wicklungselement
- 4: Wickelkopfträger
- 5: Halteelemente
- 6: Zugbolzen
- 7: Stützkörper
- 8: Anschlagfläche
- 9: Elastisches Element
- 10: Hülse
- 11: Absatz

## Patentansprüche

1. Rotor (1) für eine elektrische Maschine mit einem Rotorkörper (2), einer Vielzahl von Wicklungselementen (3) und einem axial neben dem Rotorköper (2) angeordneten Wickelkopf, wobei die Wicklungselemente (3) in axial verlaufenden Nuten des Rotorkörpers (2) angeordnet sind, und wobei der Wickelkopf einen Wickelkopfträger (4) und eine Vielzahl von Halteelemente (5) umfasst, und wobei jedes Halteelement (5) jeweils einen Zugbolzen (6) und einen Stützkörper (7) umfasst, und wobei die Stützkörper (7) wenigstens teilweise in radialer Richtung außerhalb der Wicklungselemente (3) angeordnet sind, und wobei die Zugbolzen (6) jeweils den zugehörigen Stützkörper (7) durchdringen und mit einem Gewinde in den Wickelkopfträger (4) eingeschraubt sind, **dadurch gekennzeichnet, dass** die Halteelemente (5) jeweils eine Anschlagfläche (8) umfassen, welche so ausgebildet ist, dass dieselbe beim Einschrauben der Zugbolzen (7) an den Wickelkopfträger (4) zum Anliegen kommen kann, um so die radiale Länge, mit der die Zugbolzen (6) aus dem Wickelkopfträger (4) herausragen, auf ein vordefiniertes Maß einzustellen, wobei das vordefinierte Maß so bemessen ist, dass dabei die Stützkörper (7) in Ruhelage des Rotors (1) nicht gegen die Wicklungselemente (3) gepresst werden.

2. Rotor (1) nach Anspruch 1, und wobei ein Halteelement (5) ein elastisches Element (9) umfasst, welches in einem Zwischenraum zwischen dem zugehörigen Stützkörper (7) und den vom Halteelement gehaltenen Wicklungselementen (3) angeordnet ist.

3. Rotor (1) nach Anspruch 1 oder 2, und wobei eine Anschlagfläche (8) durch einen Absatz des Zugbolzens (6) gebildet wird.

4. Rotor (1) nach Anspruch 1 oder 2, und wobei ein Halteelement (5) eine Hülse (10) umfasst, und wobei der Zugbolzen (6) die Hülse (10) durchdringt, und wobei die Anschlagfläche (8) durch das Ende der Hülse (10) gebildet wird, welche zum Wickelkopfträger (4) hin orientiert angeordnet ist.

5. Rotor (1) nach Anspruch 4, wobei der Zugbolzen (6) einen Absatz (11) umfasst, welcher beim Anziehen des Zugbolzens (6) gegen die Hülse (10) gepresst werden kann.

6. Rotor (1) nach Anspruch 1 oder 2, und wobei ein Stützkörper (7) eine hülsenartige Ausstülpung umfasst, und wobei die Anschlagfläche (8) am Ende der Ausstülpung angeordnet ist.

## Claims

1. Rotor (1) for an electrical machine with a rotor body (2), a plurality of winding elements (3) and a winding head arranged axially next to the rotor body (2), wherein the winding elements (3) are arranged in axially extending grooves of the rotor body (2), and wherein the winding head comprises a winding head carrier (4) and a plurality of retaining elements (5), and wherein each retaining element (5) comprises a tension bolt (6) and a supporting body (7), and wherein the supporting bodies (7) are arranged at least partially in the radial direction outside the winding elements (3), and wherein the tension bolts (6) each penetrate the associated supporting body (7) and are screwed into the winding head carrier (4) by means of a thread, **characterised in that** the retaining elements (5) each comprise a stop surface (8) which is designed in such a way that it can come to bear against the winding head carrier (4) when the tension bolts (7) are screwed in, so as to set the radial length with which the tension bolts (6) protrude from the winding head carrier (4) to a predefined dimension, the predefined dimension being dimensioned such that the supporting bodies (7) are not pressed against the winding elements (3) when the rotor (1) is at rest.

2. Rotor (1) according to claim 1, and wherein a holding element (5) comprises an elastic element (9) which is arranged in an intermediate space between the associated supporting body (7) and the winding elements (3) held by the holding element.

3. Rotor (1) according to claim 1 or 2, and wherein a stop surface (8) is formed by a shoulder of the tension bolt (6).

4. Rotor (1) according to claim 1 or 2, and wherein a retaining element (5) comprises a sleeve (10), and wherein the tension bolt (6) penetrates the sleeve (10), and wherein the stop surface (8) is formed by the end of the sleeve (10), which is arranged orientated towards the winding head support (4).

5. Rotor (1) according to claim 4, wherein the tension bolt (6) comprises a shoulder (11) which can be pressed against the sleeve (10) when the tension bolt (6) is tightened.

6. Rotor (1) according to claim 1 or 2, and wherein a supporting body (7) comprises a sleeve-like protuberance, and wherein the stop surface (8) is arranged at the end of the protuberance.

## Revendications

1. Rotor (1) pour une machine électrique avec un corps de rotor (2), une pluralité d'éléments de bobinage (3) et une tête de bobinage disposée axialement à côté du corps de rotor (2), les éléments de bobinage (3) étant disposés dans des rainures s'étendant axialement du corps de rotor (2), et dans lequel la tête d'enroulement comprend un support de tête d'enroulement (4) et une pluralité d'éléments de retenue (5), et dans lequel chaque élément de retenue (5) comprend respectivement un boulon de traction (6) et un corps de support (7), et dans lequel les corps de support (7) sont disposés au moins partiellement dans la direction radiale à l'extérieur des éléments d'enroulement (3), et les boulons de traction (6) traversant chacun le corps d'appui (7) correspondant et étant vissés avec un filetage dans le support de tête d'enroulement (4), **caractérisé en ce que** les éléments de retenue (5) comprennent chacun une surface de butée (8) qui est conçue de telle sorte qu'elle peut venir en appui sur le support de tête d'enroulement (4) lors du vissage des boulons de traction (7), pour régler ainsi à une mesure prédéfinie la longueur radiale avec laquelle les boulons de traction (6) dépassent du support de tête d'enroulement (4), la mesure prédéfinie étant dimensionnée de telle sorte que les corps d'appui (7) ne sont pas pressés contre les éléments d'enroulement (3) dans la position de repos du rotor (1).

2. Rotor (1) selon la revendication 1, et dans lequel un élément de retenue (5) comprend un élément élastique (9) qui est disposé dans un espace intermédiaire entre le corps de support associé (7) et les éléments d'enroulement (3) retenus par l'élément de retenue.

3. Rotor (1) selon la revendication 1 ou 2, et dans lequel une surface de butée (8) est formée par un épaulement du boulon de traction (6).

4. Rotor (1) selon la revendication 1 ou 2, et dans lequel un élément de retenue (5) comprend un manchon (10), et dans lequel le boulon de traction (6) traverse le manchon (10), et dans lequel la surface de butée (8) est formée par l'extrémité du manchon (10), qui est disposée en étant orientée vers le support de tête d'enroulement (4).

5. Rotor (1) selon la revendication 4, dans lequel le boulon de traction (6) comprend un épaulement (11) qui peut être pressé contre le manchon (10) lors du serrage du boulon de traction (6).

6. Rotor (1) selon la revendication 1 ou 2, et dans lequel un corps de support (7) comprend une protubérance en forme de manchon, et dans lequel la surface de butée (8) est disposée à l'extrémité de la protubérance.
